# EUROPÄISCHE PATENTSCHRIFT

(11) **EP 1 094 716 B1**
(45) Veröffentlichungstag und Bekanntmachung des Hinweises auf die Patenterteilung: **08.03.2006**
(21) Anmeldenummer: 00936652.7
(22) Anmeldetag: 03.05.2000
(51) Int. Cl.: A23G 3/02, A23G 3/06, A23G 3/12, A23G 3/20, B01J 27/22, A23G 7/00

(54) **ABROLLMASCHINE**
BENDING ROLLS MACHINE
MACHINE A ROULER

(30) Priorität: 05.05.1999 DE 19920612
(43) Veröffentlichungstag der Anmeldung: 02.05.2001
(73) Patentinhaber: ROBERT BOSCH GMBH, 70442 Stuttgart (DE)
(72) Erfinder: COTTEVERTE, Patrick, F-67400 Illkirch Graffenstaden (FR); BERNARD, Daniel, F-67280 Urmatt (FR)
(86) Internationale Anmeldenummer: PCT/DE2000/001366
(87) Internationale Veröffentlichungsnummer: WO 2000/067586

(56) Entgegenhaltungen:
- DE-C- 16 485
- DE-C- 257 504
- US-A- 1 479 569
- US-A- 3 245 360
- US-A- 3 570 417
- US-A- 5 657 934

## Beschreibung

### Stand der Technik

Die Erfindung betrifft eine Abrollmaschine nach dem Oberbegriff des Anspruchs 1. Bei einer derartigen bekannten Abrollmaschine sind die Formzylinder in ortsfesten Lagern angeordnet und direkt mit ihrem Antrieb gekoppelt. Daher sind die Achsabstände zwischen den Formzylindern vorgegeben, so daß die Abrollmaschine nur für einen bestimmten Formatbereich geeignet ist. Eine Anpassung an einen anderen Formatbereich ist daher, wenn überhaupt, nur durch aufwendige Umrüstarbeiten möglich.

Aus der DE-16485 ist eine Abrollmaschine bekannt, die eine Verstellung bzw. einen Austausch der in Lagerschalen montierten Formzylinder ermöglicht.

### Vorteile der Erfindung

Die erfindungsgemäße Abrollmaschine mit den kennzeichnenden Merkmalen des Anspruchs 1 hat demgegenüber den Vorteil, daß sie dazu geeignet ist, einen sehr großen Formatbereich ohne aufwendige Umrüstarbeiten abzudecken. Dies wird durch an der Maschine austauschbar angeordnete Lagerblöcke ermöglicht, wobei die in den Lagerblöcken gelagerten Formzylinder über gelenkige Elemente mit ihrem Antrieb gekoppelt sind. Dadurch ist es möglich, Lagerblöcke mit unterschiedlichen Abständen zwischen den einzelnen Formzylindern in Art eines Moduls an die Abrollmaschine anzukoppeln.

Weitere vorteilhafte Weiterbildungen der erfindungsgemäßen Abrollmaschine sind in den Unteransprüchen angegeben. Besonders einfach und sicher läßt sich der Austausch und die Befestigung der Lagerblöcke an der Abrollmaschine verwirklichen, wenn die Lagerblöcke teilweise formschlüssig in entsprechenden Aufnahmen in der Abrollmaschine aufgenommen und mit einer Spanneinrichtung sicherbar sind.

### Zeichnung

Ein Ausführungsbeispiel der Erfindung ist in der Zeichnung dargestellt und wird nachfolgend näher erläutert. Es zeigen:
- Figur 1: eine vereinfachte Draufsicht auf einen Teil einer erfindungsgemäßen Abrollmaschine,
- Figur 2: eine Seitenansicht der Abrollmaschine nach Figur 1 und
- Figur 3: eine Seitenansicht in Richtung III der Figur 1.

### Beschreibung des Ausführungsbeispiels

Die in den Figuren dargestellte Abrollmaschine 10 dient zum Formen von kleinstückigen, rotationssymmetrischen Produkten aus einem Massestrangabschnitt. Eine derartige Abrollmaschine 10 wird in der Süßwarenindustrie zum Herstellen von unterschiedlich gefüllten oder ungefüllten Massen wie Bubble-Gum, Kaubonbons oder Karamellen benutzt. Zum Formen der Produkte hat die Abrollmaschine 10 drei parallel zueinander ausgerichtete Formzylinder 11, 12, 13, wobei die ersten beiden Formzylinder 11, 12 einen festen Achsabstand voneinander aufweisen, während der dritte Formzylinder 13 schwenkbar zu den beiden ersten Formzylindern 11, 12 angeordnet ist. In den Figuren ist der Zustand dargestellt, in der die Formzylinder 11, 12, 13 zum Formen von Produkten aus einem dazwischen befindlichen Massestrangabschnitt zusammenwirken. Um diesen Massestrangabschnitt zwischen die Formzylinder 11, 12, 13 zu verbringen ist der bewegliche Formzylinder 13 von den beiden anderen Formzylindern 11, 12 wegschwenkbar. Zum Drehen um ihre Längsachsen weisen die drei Formzylinder 11, 12, 13 einen gemeinsamen Antriebsmotor 15 auf. Die Antriebswelle 16 des Antriebsmotors 15 treibt über ein Antriebszahnrad drei Zahnräder 17 an, die mit Gelenkwellen 18, 19, 20 verbunden sind. Die Gelenkwellen 18, 19, 20 sind mittels Kupplungselementen 21 mit dem jeweiligen Formzylinder 11, 12, 13 austauschbar gekoppelt. Der Antriebsmotor 15 ist über eine Konsole 22 am Gestell der Abrollmaschine 10 befestigt. Weiterhin stützt sich die Konsole 22 über eine Strebe 23 an einer ersten Zwischenwand 25 des Gehäuses ab. Die Formzylinder 11, 12, 13 sind stirnseitig an Lagerblöcken 26, 27 befestigt. Die Lagerblöcke 26, 27 weisen jeweils einen die zwei starren Formzylinder 11, 12 tragenden Lagerkörper 28, 29 auf, an denen über jeweils einen Hebel 31 der Formzylinder 13 schwenkbar befestigt ist.

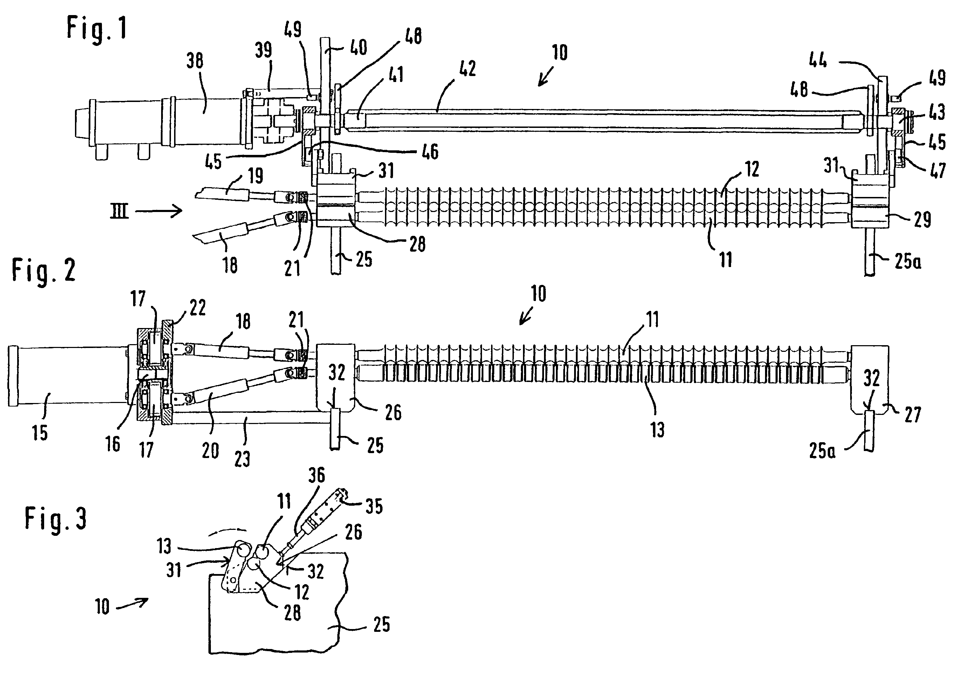

Wesentlich ist, daß (wie am besten aus der Figur 3 ersichtlich ist) die Lagerblöcke 26, 27 in entsprechend angepaßten Ausnehmungen 32 der Zwischenwände 25, 25a teilweise formschlüssig aufgenommen sind. Zum Fixieren der Lagerblöcke 26, 27 in den Ausnehmungen 32 der Zwischenwände 25, 25a dient jeweils eine vorzugsweise pneumatisch arbeitende Spanneinrichtung 25, die ortsfest am Gestell der Abrollmaschine 10 befestigt ist und mit einem Stab 36 auf eine Stirnfläche 37 des Lagerblockes 26, 27 einwirkt.

Zum Verschwenken der Hebel 31 dient ein weiterer, bevorzugt als Servomotor ausgebildeter Antriebsmotor 38, der auf der selben Seite wie der Antriebsmotor 15 angeordnet ist. Der weitere Antriebsmotor 38 ist über eine Verstrebung 39 mit einer weiteren Zwischenwand 40 des Gehäuses der Abholmaschine 10 verbunden. Auf der dem weiteren Antriebsmotor 38 gegenüberliegenden Seite mündet dessen Antriebswelle 41 in einer Hohlwelle 42, die über ein Endstück 43 in einer weiteren Zwischenwand 44 gelagert ist. Auf den einander abgewandten Seiten der Zwischenwände 40, 44 ist auf der Antriebswelle 41 bzw. dem Endstück 43 jeweils ein Schwenkhebel 45 drehfest befestigt, der über eine Laufbahn jeweils eine mit dem Hebel 31 gekoppelte Rolle 46, 47 führt und bei einer Drehung mitnimmt.

Zuletzt ist auf den einander zugewandten Seiten der Zwischenwände 40, 44 auf der Antriebswelle 41 bzw. dem Endstück 43 jeweils eine Signalscheibe 48 befestigt, deren Position über einen Näherungssensor 49 erfaßt werden kann. Die Näherungssensoren 49 dienen zum Erkennen des Nullpunktes bei einem als Servomotor ausgebildeten Antriebsmotor 38 und somit zum Steuern der Schwenkbewegung des Formzylinders 13.

Die Formzylinder 11, 12, 13 sind jeweils für einen bestimmten Formatbereich geeignet. Soll die Abrollmaschine 10 Produkte mit einem anderen Formatbereich verarbeiten, so müssen die Formzylinder 11, 12, 13 gegen einen Satz anderer Formzylinder ausgetauscht werden. Dazu genügt es, die Spanneinrichtung 35 zu lösen und die beiden Lagerblöcke 26, 27 samt den daran befestigten Formzylindern 11, 12, 13 aus den Ausnehmungen 32 zu nehmen. Zuvor müssen lediglich noch die Kupplungselemente 21, die die Gelenkwellen 18, 19, 20 mit den Formzylindern 11, 12, 13 verbinden, gelöst werden. Nachdem andere Formzylinder, welche an identische äußere Abmessungen aufweisende Lagerblöcke gelagert sind, in die Ausnehmungen 32 eingeführt, die Kupplungselemente 21 der Gelenkwellen 18, 19, 20 mit den neuen Formzylindern verbunden, die Spanneinrichtung 35 die neuen Lagerblöcke gesichert hat und beim Einsatz eines Servomotor als Antriebsmotor 38 die Steuerungsparameter gewechselt sind, kann der Betrieb der Abholmaschine 10 mit einem anderen Formatbereich wieder aufgenommen werden.

Die erfindungsgemäße Abrollmaschine 10 läßt sich in vielfältiger Weise modifizieren bzw. abwandeln. So ist es beispielsweise denkbar, die Abrollmaschine 10 mit einer Formzylindererkennung auszustatten, so daß ein bestimmtes vorgesehenes Bewegungsprogramm gefahren werden kann, wenn die entsprechend codierten Formzylinder ausgetauscht worden sind. Ferner ist der Antriebsmotor 38 für die Schwenkbewegung des Formzylinders 13 bevorzugt als nachlaufgesteuerter Motor ausgebildet, um seine Bewegung zu optimieren.

## Patentansprüche

1. Abrollmaschine (10), mit mehreren, parallel zueinander ausgerichteten Formzylindern (11, 12, 13) zum Formen von kleinstückigen Produkten aus einem Massestrangabschnitt wobei die Formzylinder (11, 12, 13) an Lagerelementen (26, 27) befestigt sind, die austauschbar in Aufnahmen (32) der Abrollmaschine (10) befestigbar sind, mit einem ersten Antriebsmotor (15) zum Drehen der Formzylinder (11, 12, 13) um deren Längsachsen **dadurch gekennzeichnet, daß** einer zweiter Antriebsmotor (38) zum Schwenken eines der Formzylinder (13) relativ zu den anderen Formzylindern (11, 12) vorgesehen ist und daß der erste Antriebsmotor (15) mittels gelenkigen Elementen (18, 19, 20) mit den Formzylindern 11, 12, 13) gekoppelt ist.

2. Abrollmaschine nach Anspruch 1, **dadurch gekennzeichnet, daß** die Lagerelemente (26, 27) blockförmig ausgebildet sind, daß die Aufnahmen (32) die Lagerelemente (26, 27) teilweise formschlüssig aufnehmen und daß die Lagerelemente (26, 27) mittels wenigstens einer Spanneinrichtung (35) in den Aufnahmen (32) fixierbar sind.

3. Abrollmaschine nach Anspruch 1 oder 2, **dadurch gekennzeichnet, daß** die Lagerelemente (26, 27) den schwenkbaren Formzylinder (13) tragende Hebel (31) mit jeweils einer Rolle (46, 47) haben, die in mit dem zweiten Antriebsmotor (38) gekoppelte Schwenkhebel (45) eingreifen.

## Claims

1. Roll-off machine (10), with a plurality of forming cylinders (11, 12, 13), oriented parallel to one another, for the forming of small-sized products from an extruded portion, the forming cylinders (11, 12, 13) being fastened to bearing elements (26, 27) which can be fastened exchangeably in receptacles (32) of the roll-off machine (10), with a first drive motor (15) for rotating the forming cylinders (11, 12, 13) about their longitudinal axes, **characterized in that** a second drive motor (38) is provided for pivoting one of the forming cylinders (13) in relation to the other forming cylinders (11, 12), and **in that** the first drive motor (15) is coupled to the forming cylinders (11, 12, 13) by means of articulated elements (18, 19, 20).

2. Roll-off machine according to Claim 1, **characterized in that** the bearing elements (26, 27) are of block-shaped design, **in that** the receptacles (32) partially receive the bearing elements (26, 27) positively, and **in that** the bearing elements (26, 27) can be fixed in the receptacles (32) by means of at least one clamping device (35).

3. Roll-off machine according to Claim 1 or 2, **characterized in that** the bearing elements (26, 27) have levers (31) carrying the pivotable forming cylinder (13), in each case with a roller (46, 47), the said rollers engaging into pivoting levers (45) coupled to the second drive motor (38).

## Revendications

1. Machine à rouler (10) comprenant, pour former des produits en petits morceaux constitués chacun d'une section d'un boudin de matière, plusieurs cylindres de formage (11, 12, 13) parallèles et fixés sur des éléments de palier (26, 27) qui peuvent être fixés avec possibilité d'échange dans des logements (32) de la machine (10), ainsi qu'un premier moteur d'entraînement (15) pour faire tourner les cylindres de formage (11, 12, 13) autour de leurs axes longitudinaux
**caractérisée en ce qu'**
un second moteur d'entraînement (38) permet de faire basculer un des cylindres (13) par rapport aux autres cylindres (11, 12), et
le premier moteur d'entraînement (15) est relié par des éléments articulés (18, 19, 20) aux cylindres de formage (11, 12, 13).

2. Machine à rouler selon la revendication 1,
**caractérisée en ce que**
les éléments de palier (26, 27) ont la forme de blocs logés avec verrouillage partiel par combinaison de formes dans les logements (32) et peuvent être fixés dans ceux-ci au moyen d'au moins un dispositif de serrage (35).

3. Machine à rouler selon la revendication 1 ou 2,
**caractérisée en ce que**
les éléments de palier (26, 27) possèdent des leviers (31) qui portent les cylindres de formage (13) basculables et qui sont équipés chacun d'un rouleau (46, 47) en prise avec le levier basculant (45) couplé au second moteur d'entraînement (38).
